# EUROPÄISCHE PATENTANMELDUNG

(11) **EP 2 048 925 A2**
(43) Veröffentlichungstag der Anmeldung: **15.04.2009**
(21) Anmeldenummer: 08017081.4
(22) Anmeldetag: 29.09.2008
(51) Int. Cl.: H05K 5/00, H05K 7/14

(54) **Befestigungsvorrichtung**

(30) Priorität: 08.10.2007 DE 102007048298
(71) Anmelder: Behr GmbH & Co. KG, 70469 Stuttgart (DE)
(72) Erfinder: Hinderberger, Hans-Dieter, 70499 Stuttgart (DE); Kreuzer, Walter, 71229 Leonberg (DE); Feith, Thomas, 70825 Korntal-Münchingen (DE); Dettling, Elke, 71679 Asperg (DE)

(57) **Zusammenfassung**

Die Erfindung betrifft eine Befestigungsvorrichtung, aufweisend mindestens einen an einem Kunststoffgehäuse (1) ausgebildeten Dom (2) über welchen ein einstückig mit demselben ausgebildeter Stift (3) übersteht, wobei das Ende des Stifts (3) der Fixierung eines an der Befestigungsvorrichtung anzubringenden Elements (10) dient, und der Stift (3) einen Absatz (9) aufweist, welcher als Anlagefläche für das an der Befestigungsvorrichtung anzubringende Element (10) dient, wobei zumindest im zentralen Bereich des Stifts (3) eine Aussparung oder Ausnehmung vorgesehen ist, welche sich bis unterhalb der durch den Absatz (9) gebildeten Anlagefläche erstreckt.

## Beschreibung

Die vorliegende Erfindung betrifft eine Befestigungsvorrichtung gemäß dem Oberbegriff des Anspruchs 1.

Zur Befestigung von Stellmotoren, die für die Betätigung von beweglichen Teilen benötigt werden, insbesondere bei Heizungs- und Klimaanlagen oder Fahrzeugbelüftungssystemen, werden dieselben am Gehäuse festgeschraubt.

Aus der DE 10 2005 049 816 A1 ist ein Kunststoffgehäuse bekannt, welches Schraubdome aufweist, über welche zwei Gehäusehälften miteinander verbunden sind. Hierbei weisen die Schraubdome zur Aufnahme der Schrauben und die Dome zur Durchführung der Schrauben an ihren freien Enden formschlüssige Endbereiche auf, um eine Torsion der Schraubdome zu verhindern und Platz zu sparen.

Die DE 196 09 679 C2 offenbart eine Verbindung zwischen einem Bauteil aus Kunststoff und einem Träger zur Bildung eines Verbundteils, bei dem das Bauteil aus Kunststoff mit einem Schnapphaken durch eine Öffnung des Trägers geführt und mit diesem verrastet ist. Nach dem Verrasten erfolgt ein Umformen des überstehenden Bereichs mit Hilfe eines Stempels zu einem Pfropf, so dass ein ungewolltes Lösen, bspw. in Folge von Vibrationen, verhindert wird. Der Schnapphaken ist hierbei gemäß einer der offenbarten Ausführungsformen durch zwei Federarme gebildet, welche von einem gemeinsamen sockelartigen Fußbereich ausgehen und zwischen denen ein Schlitz ausgebildet ist.

Es ist die Aufgabe der Erfindung, eine verbesserte Befestigungsvorrichtung, insbesondere für die Befestigung von Stellmotoren an einem Kunststoffgehäuse, zur Verfügung zu stellen. Insbesondere soll die Befestigungsvorrichtung derart ausgebildet sein, dass sie ohne wesentlichen Aufwand gelöst und erneuert werden kann.

Diese Aufgabe wird gelöst durch eine Befestigungsvorrichtung mit den Merkmalen des Anspruchs 1. Vorteilhafte Ausgestaltungen sind Gegenstand der Unteransprüche.

Die Erfindung betrifft eine Befestigungsvorrichtung, aufweisend mindestens einen an einem Kunststoffgehäuse ausgebildeten Dom über welchen ein einstückig mit demselben ausgebildeter Stift übersteht, wobei das Ende des Stifts der Fixierung eines an der Befestigungsvorrichtung anzubringenden Elements dient, und der Stift einen Absatz autweist, welcher als Anlagefläche für das an der Befestigungsvorrichtung anzubringende Element dient. Hierbei ist zumindest im zentralen Bereich des Stifts eine Aussparung oder Ausnehmung vorgesehen, welche sich bis unterhalb der durch den Absatz gebildeten Anlagefläche erstreckt.

Eine derartige Befestigungsvorrichtung ist kostengünstig herstellbar, insbesondere kostengünstiger als eine Schraubverbindung als Erstverbindung. Im relativ seltenen Servicefall lässt sich der überstehende Teil des Stifts einfach abschneiden. Ferner ist durch das Vorsehen einer Aussparung oder Ausnehmung, welche sich zumindest ab der Höhe des Absatzes bis unterhalb die durch den Absatz gebildeten Anlagefläche erstreckt, eine definierte Einschraubstelle für eine selbstschneidende Schraube vorgesehen, welche als Zweitverbindung die ab der Anlagefläche entfernte, ursprüngliche Verbindung bzw. Erstverbindung ersetzt. Wird der über den Absatz, welcher als Anlagefläche dient, überstehende Bereich nach dem Lösen der Erstverbindung abgetrennt, so kann die Erstverbindung einfach durch eine Schraube als Zweitverbindung ersetzt werden. Somit ergibt sich zum einen eine sehr einfach herzustellende Erstverbindung, wobei es sich auch um eine nicht zerstörungsfrei lösbare Verbindung handeln kann, die nach dem Öffnen der Verbindung durch eine andere, etwas aufwendigere Zweitverbindung ersetzt werden kann. Die Mittel für die Zweitverbindung, d.h. selbstschneidende Schrauben, sind in den geeigneten Abmessungen ohne Probleme erhältlich, d.h. in einer Werkstatt kann die Zweitverbindung ohne Erfordernis von Originalbauteilen allein durch üblicherweise vorhandene Elemente ersetzt werden.

Der Dom weist vorzugsweise einen durch Stützrippen versteiften Bereich auf, welcher sich von der Oberfläche des Kunststoffgehäuses bis unterhalb des Absatzes erstreckt. Die Stützrippen sind hierbei bevorzugt über den Umfang verteilt angeordnet, wobei die Höhe der Stützrippen sich mit zunehmenden Abstand von der Oberfläche des Gehäuses verringert und die Stützrippen in einer Ebene enden.

Insbesondere bevorzugt erstreckt sich die eine Aussparung oder Ausnehmung, die zumindest im zentralen Bereich des Stifts vorgesehen ist, bis unterhalb einer Ebene, welche durch das Ende einer Versteifung des Doms definiert ist.

Vorzugsweise ist die Aussparung oder Ausnehmung durch einen Schlitz oder eine zentrale Öffnung gebildet. Der Schlitz erstreckt sich hierbei quer durch die Mittellängsachse des Stifts. Entsprechend erstreckt sich die zentrale Öffnung entlang der Mittellängsachse des Stifts.

Besonders bevorzugt weist der Stift zwei Federarme mit sich nach außen erstreckenden, hakenförmigen Vorsprüngen auf, zwischen denen ein Schlitz angeordnet ist. Die Federarme sind bevorzugt federelastisch ausgebildet und werden im Rahmen des Zusammenbaus kurzfristig elastisch verformt und gelangen nach Erreichen der Endstellung wieder in ihre Ausgangsstellung zurück.

Das Ende des Stifts ist bevorzugt plastisch zu einem Kopf umgeformt, wobei sich der Stift zwischen dem Anschlag und dem Kopf durch eine Öffnung des mittels der Befestigungsvorrichtung am Kunststoffgehäuse anzubringenden Element erstreckt. Diese Öffnung ist bevorzugt mit kreisförmigem Querschnitt ausgebildet, insbesondere besonders bevorzugt durch eine Bohrung. Die Öffnung ist vorzugsweise in einem plattenförmigen Bereich des Elements ausgebildet, welches am Kunststoffgehäuse mittels der Befestigungsvorrichtung angebracht wird.

Das Kunststoffgehäuse ist vorzugsweise ein Gehäuse einer Fahrzeugklimaanlage und dient der Anbringung eines Stellmotors. Für die Fixierung des Stellmotors sind bevorzugt drei Befestigungsvorrichtungen vorgesehen. Insbesondere bevorzugt liegen die Absätze, welche als Anlageflächen für das zu fixierende Element dienen, in einer Ebene.

Im Servicefall, also wenn die Erstverbindung gelöst werden muss, um das am Kunststoffgehäuse angebrachte Element zu warten, und die Erstverbindung durch das Lösen zerstört wird, wird der Stift bis zum Absatz gekürzt.

Für die erneute Montage des anzubringenden Elements wird eine Schraube mit selbstschneidendem Gewinde in den gekürzten Stift eingeschraubt.

Die im verbleibenden Teil des Stifts ausgebildete Vertiefung dient hierbei zur Positionierung der Schraube vor dem Einschrauben.

Besonders bevorzugt wird mindestens eine derartige Befestigungsvorrichtung bei einem Klimaanlagengehäuse verwendet, wobei sie der Befestigung eines Stellmotors dient.

Im Folgenden wird die Erfindung anhand zweier Ausführungsbeispiele unter Bezugnahme auf die beiliegende Zeichnung näher erläutert. In der Zeichnung zeigen:

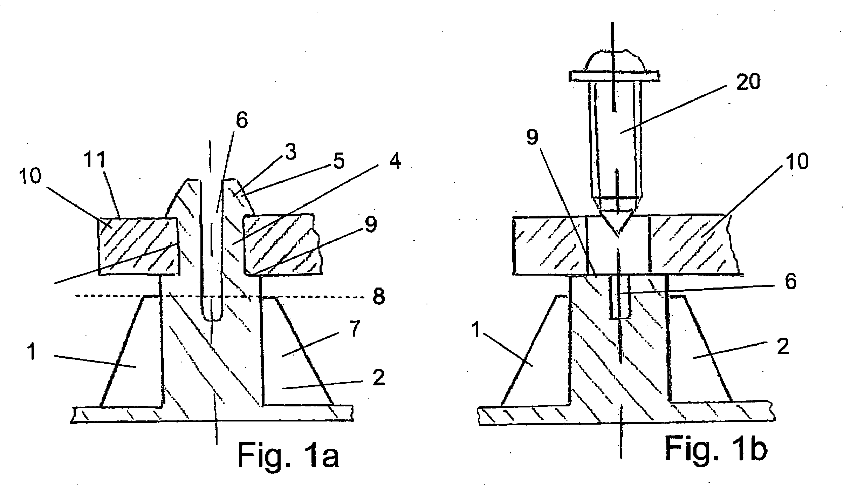

- Fig. 1a: einen Schnitt durch eine Erstverbindung gemäß dem ersten Ausführungsbeispiel,
- Fig. 1 b: einen Schnitt durch den Verbindungsbereich von Fig. 1a vor Erstellung einer Zweitverbindung,
- Fig. 2a: einen Schnitt durch einen Verbindungsbereich vor Erstellung der Erstverbindung gemäß dem zweiten Ausführungsbeispiel,
- Fig. 2b: einen Schnitt durch die Erstverbindung gemäß dem zweiten Ausführungsbeispiel, und
- Fig. 2c: einen Schnitt durch den Verbindungsbereich von Fig. 2b vor Erstellung einer Zweitverbindung.

Ein Kunststoffgehäuse 1 einer Fahrzeugklimaanlage weist außenseitig mehrere, vorliegend drei Dome auf, wobei in der Zeichnung nur ein Dom 2 mit einem Stift 3 dargestellt ist, die einstückig mit dem Gehäuse 1 ausgebildet sind. Die Dome 2 sind einander entsprechend ausgebildet, weshalb im Folgenden nur ein Dom 2 näher beschrieben ist. Der Stift 3 weist zwei Federarme 4 mit hakenförmigen Vorsprüngen 5 auf, wobei ein Schlitz 6 zwischen den Federarmen 4 ausgebildet ist. Der Dom 2 weist mehrere, vorliegend vier äquidistant über den Umfang verteilte Stützrippen 7 auf, welche in einer Ebene 8 enden, über welche der Stift 3 senkrecht hinausragt. Hierbei weist der Stift 3 etwas oberhalb der Ebene 8, also von der Oberfläche des Gehäuses 1 beabstandeter als die Ebene 8, einen Absatz 9 auf, welcher eine vom Schlitz 6 unterbrochene Ringfläche bildet, die parallel zur Ebene 8 verläuft und, wie an späterer Stelle näher erläutert wird, als Anlagefläche dient. Der Schlitz 6 reicht bis etwas unterhalb der Ebene 8, also bis in den versteiften Bereich des Doms 2 hinein. Die drei Dome 2 sind vorliegend derart angeordnet, dass die drei Absätze 9 in einer Ebene liegen.

Am Kunststoffgehäuse 1 ist ein Stellmotor 10 angebracht, wobei in der Zeichnung nur ein kleiner Ausschnitt des Stellmotors 10 dargestellt ist. Der Stellmotor 10 weist eine Platte 11 auf, welche mit drei Bohrungen 12 versehen ist, wobei die drei Bohrungen 12 entsprechend den drei Domen 2 verteilt angeordnet sind. Der Innendurchmesser der Bohrungen 12 entspricht dem Außendurchmesser der Stifte 3 im Bereich der Federarme 4 oberhalb des Absatzes 9 und unterhalb der hakenförmigen Vorsprünge 5. Ferner entspricht die Dicke der Platte 11 im Bereich der Bohrungen 12 dem Abstand zwischen Absatz 9 und hakenförmigem Vorsprung 5. Die Abmessungen der hakenförmigen Vorsprünge 5 sowie des Schlitzes 6 zwischen denselben ist derart bemessen, dass die hakenförmigen Vorsprünge 5 bei einer rein elastischen Verformung der Federarme 4 durch die Bohrungen 12 passen. Nach dem Durchführen der hakenförmigen Vorsprünge 5 spreizen sich die Federarme 4 wieder auseinander, so dass die Platte 11 durch die Federarme 4 sicher gehalten wird. Hierbei wird der Stellmotor 10 durch die Stifte 3 positioniert und gegen ein Verdrehen gesichert. Die Anlageflächen sowie die durch die hakenförmigen Vorsprünge 5 gebildeten Gegenflächen halten den Stellmotor 10 in axialer Richtung.

Gemäß einer Variante des ersten Ausführungsbeispiels wird nach dem Zusammenfügen von Kunststoffgehäuse 1 und Stellmotor 10 der überstehende Bereich der Federarme 4 plastisch verformt, so dass ein Nietkopf gebildet wird, wie es beispielsweise auch in der DE 196 09 697 C2 beschrieben ist.

Soll der Stellmotor 10 im Servicefall ausgetauscht werden, so werden die Federarme 4 in der Ebene des Absatzes 9, also der Anlagefläche für die Platte 11, abgeschnitten. Der Stellmotor 10 wird ausgetauscht oder gewartet und mittels einer selbstschneidenden Schraube 20, welche durch den verbleibenden Teil des Schlitzes 6 leichter eingreifen kann, am Dom 2 festgeschraubt. Bei einem weiteren Servicefall können die Schrauben 20 einfach heraus- und nach Austausch des Stellmotors 10 wieder hineingeschraubt werden.

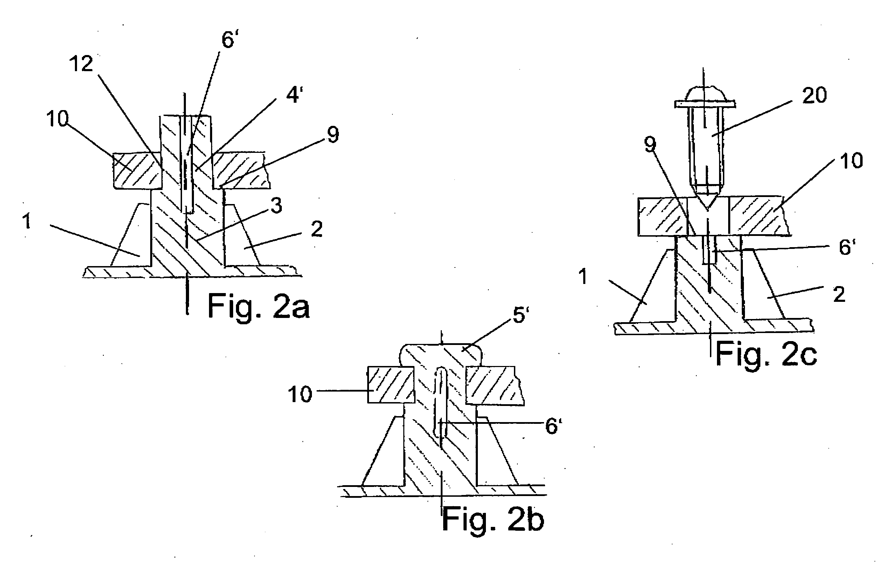

Gemäß dem zweiten Ausführungsbeispiel, das in den Figuren 2a-2c dargestellt ist, sind gleiche oder gleichwirkende Elemente mit den gleichen Bezugszeichen wie beim ersten Ausführungsbeispiel bezeichnet. Die Ausgestaltung des Doms 2 entspricht hierbei derjenigen des Doms 2 des ersten Ausführungsbeispiels, d.h. es ist ein überstehender Stift 3 ausgebildet, jedoch sind am Stift 3 keine Federarme 4 mit hakenförmigen Vorsprüngen 5 vorgesehen, sondern vom Absatz 9 steht ein zylinderförmiger Arm 4' vor, welcher eine zentrale Öffnung 6' in Gestalt eines Sacklochs aufweist, das bis etwas unterhalb der Ebene 8, also bis in den versteiften Bereich des Doms 2 hinein reicht. Die Verteilung der Dome 2 über die Oberfläche des Kunststoffgehäuses 1 ebenso wie die Ausgestaltung des Stellmotors 10 entspricht hierbei derjenigen des ersten Ausführungsbeispiels, so dass hierauf im Folgenden nicht näher eingegangen wird.

Der zylinderförmige Arm 4' des Doms 2 steht nach dem Aufsetzen der Platte 11 des Stellmotors 10, welche in dichter Anlage an den Absatz 9 ist, ausreichend über die Platte 11 über. Hierbei entspricht der Außendurchmesser des Arms 4' dem Innendurchmesser der Bohrung 12 in der Platte 11. Der überstehende Bereich des Arms 4' wird zu einem Kopf 5' verformt (siehe Fig. 2b), welcher die Funktion der hakenförmigen Vorsprünge 5 an den Enden der Federarme 4 des ersten Ausführungsbeispiels übernimmt und den Stellmotor 10 sicher am Kunststoffgehäuse 1 hält.

Im Servicefall wird entsprechend dem ersten Ausführungsbeispiel vorgegangen, d.h. der Arm 4' wird im Bereich des Absatzes 9 abgeschnitten. Der gewartete oder ausgetauschte Stellmotor 10 wird mittels einer selbstschneidenden Schraube 20, welche durch den verbleibenden Teil der zentralen Öffnung 6' leichter eingreifen kann, am Dom 2 festgeschraubt. Bei einem weiteren Servicefall können die Schrauben 20 einfach heraus- und nach Austausch des Stellmotors 10 wieder hineingeschraubt werden.

Gemäß einer ersten Variante des zweiten Ausführungsbeispiels, die nicht in der Zeichnung dargestellt ist, können - an Stelle einer plastischen Verformung des überstehenden Bereichs des Arms 4' - nach dem Aufsetzen des Stellmotors eine oder mehrere Sicherungsscheiben oder Federringe übergeschoben werden, welche sich am Material des Arms unter leichter plastischer Vorformung desselben festhalten. Hierbei können die Sicherungsscheiben auch direkt am Stellmotor im Bereich der Bohrungen vormontiert sein, so dass sich die Montage deutlich vereinfacht und beschleunigt.

Als zweite Variante des zweiten Ausführungsbeispiels, die ebenfalls nicht in der Zeichnung dargestellt ist, kann - an Stelle einer plastischen Verformung des überstehenden Bereichs des Arms 4' - nach dem Aufsetzen des Stellmotors ein Spreizniet in die Öffnung eingesteckt werden, welche den überstehenden Bereich verformt und die Platte und den Arm miteinander verklemmt.

Auch im Falle der vorstehend beschriebenen Varianten des zweiten Ausführungsbeispiels erfolgt im Servicefall ein Abschneiden des über den Absatz überstehenden Bereichs des Stifts und eine Montage des Stellmotors mit Hilfe von selbstschneidenden Schrauben.

## Patentansprüche

1. Befestigungsvorrichtung, aufweisend mindestens einen an einem Kunststoffgehäuse (1) ausgebildeten Dom (2) über welchen ein einstückig mit demselben ausgebildeter Stift (3) übersteht, wobei das Ende des Stifts (3) der Fixierung eines an der Befestigungsvorrichtung anzubringenden Elements (10) dient, und der Stift (3) einen Absatz (9) aufweist, welcher als Anlagefläche für das an der Befestigungsvor richtung anzubringende Element (10) dient,
**dadurch gekennzeichnet, dass**
zumindest im zentralen Bereich des Stifts (3) eine Aussparung oder Ausnehmung vorgesehen ist, welche sich bis unterhalb der durch den Absatz (9) gebildeten Anlagefläche erstreckt.

2. Befestigungsvorrichtung nach Anspruch 1, **dadurch gekennzeichnet, dass** der Dom (2) einen durch Stützrippen (7) versteiften Bereich aufweist, welcher sich von der Oberfläche des Kunststoffgehäuses (1) bis unterhalb des Absatzes (9) erstreckt.

3. Befestigungsvorrichtung nach Anspruch 1 oder 2, **dadurch gekennzeichnet, dass** die Aussparung oder Ausnehmung durch einen Schlitz (6) oder eine zentrale Öffnung (6') gebildet ist.

4. Befestigungsvorrichtung nach einem der vorhergehenden Ansprüche,
**dadurch gekennzeichnet, dass** der Stift (3) zwei Federarme (4) mit sich nach außen erstreckenden, hakenförmigen Vorsprüngen (5) aufweist, zwischen denen ein Schlitz (6) angeordnet ist.

5. Befestigungsvorrichtung nach einem der vorhergehenden Ansprüche,
**dadurch gekennzeichnet, dass** das Ende des Stifts (3) plastisch zu einem Kopf (5') umgeformt ist, wobei sich der Stift (3) zwischen dem Anschlag (8) und dem Kopf (5') durch eine Öffnung des mittels der Befestigungsvorrichtung am Kunststoffgehäuse (1) anzubringenden Element (10) erstreckt.

6. Befestigungsvorrichtung nach einem der vorhergehenden Ansprüche,
**dadurch gekennzeichnet, dass** die Aussparung oder Ausnehmung im zentralen Bereich des Stifts (3) sich bis unterhalb einer Ebene (8) erstreckt, welche durch das Ende einer Versteifung des Doms (2) definiert ist.

7. Befestigungsvorrichtung nach einem der vorhergehenden Ansprüche,
**dadurch gekennzeichnet, dass** das Kunststoffgehäuse (1) ein Gehäuse einer Fahrzeugklimaanlage ist und der Anbringung eines Stellmotors (10) dient.

8. Verfahren zum Ersetzen einer Erstverbindung einer Befestigungsvorrichtung durch eine Zweitverbindung, wobei die Erstverbindung aufweist: mindestens einen an einem Kunststoffgehäuse (1) ausgebildeten Dom (2) über welchen ein einstückig mit demselben ausgebildeter Stift (3) übersteht, wobei das Ende des Stifts (3) der Fixierung eines an der Befestigungsvorrichtung anzubringenden Elements (10) dient, und der Stift (3) einen Absatz (9) aufweist, welcher als Anlagefläche für das an der Befestigungsvorrichtung anzubringende Element (10) dient,
**dadurch gekennzeichnet, dass** nach dem Lösen einer Erstverbindung der Stift (3) bis zum Absatz (9) gekürzt wird, und zum Ausbilden einer Ersatzverbindung eine Schraube (20) in den gekürzten Stift (3) eingeschraubt wird.

9. Verfahren nach Anspruch 8, **dadurch gekennzeichnet, dass** im verbleibenden Teil des Stifts (3) eine Vertiefung ausgebildet ist, in welche die Schraube (20) eingesetzt und anschließend eingeschraubt wird.

10. Verfahren nach Anspruch 8 oder 9, **dadurch gekennzeichnet, dass** die Schraube (20) eine selbstschneidende Schraube ist.

11. Klimaanlagengehäuse **gekennzeichnet durch** mindestens eine Befestigungsvorrichtung nach einem der Ansprüche 1 bis 7, wobei die mindestens eine Befestigungsvorrichtung einen Stellmotor (10) am Kunststoffgehäuse (1) fixiert.
